# EUROPEAN PATENT SPECIFICATION

(11) **EP 4 473 376 B1**
(45) Date of publication and mention of the grant of the patent: **15.10.2025**
(21) Application number: 23704859.0
(22) Date of filing: 19.01.2023
(51) Int. Cl.: G06F 1/16, H04M 1/02

(54) **COMPUTING DEVICE DISPLAY FRAME TRANSLATION MECHANISM**
MECHANISMUS ZUR VERSCHIEBUNG DES ANZEIGERAHMENS EINES COMPUTERGERÄTS
MÉCANISME DE TRANSLATION DE L'IMAGE D'ÉCRAN D'UN DISPOSITIF D'ORDINATEUR

(30) Priority: 01.02.2022 NL 2030803
(43) Date of publication of application: 11.12.2024
(73) Proprietor: Microsoft Technology Licensing, LLC, Redmond, WA 98052-6399 (US)
(72) Inventor: YAREMENKO, Denys V, Redmond, Washington 98052-6399 (US); TOMKY, Brett Andrew, Redmond, Washington 98052-6399 (US); TAZBAZ, Errol Mark, Redmond, Washington 98052-6399 (US)
(74) Representative: Murgitroyd & Company
(86) International application number: PCT/US2023/060890
(87) International publication number: WO 2023/150433

(56) References cited:
- US-A1- 2019 112 852
- US-A1- 2020 117 233
- US-A1- 2020 267 245
- US-A1- 2020 352 044
- US-A1- 2021 397 226

## Description

### BACKGROUND

Some foldable computing devices utilize a flexible display substrate that can deform as the device's support surfaces are folded.

The following documents may provide technical background to the present disclosure: US2021/397226 A1; US2019/112852 A1; US2020/267245 A1; US2020/117233 A1; and US2020/352044 A1.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Examples are disclosed that relate to translation mechanisms for translating display-supporting frames of a foldable computing device that utilizes a flexible display. In the present disclosure, a translation mechanism for translating a first display-supporting frame relative to a spine of a computing device is provided. The computing device comprises a flexible display supported by the first display-supporting frame, and the first display-supporting frame is rotatably coupled to a second display-supporting frame. The translation mechanism comprises a support structure rotatably coupled to the spine of the computing device, wherein the first display-supporting frame is moveably coupled to the support structure. A cam comprises a shaft that extends into the spine, and a camming surface that decreases in radius from a first cam orientation to a second cam orientation.

A multiplier lever is rotatably coupled to the support structure and comprises a multiplying surface that contacts an engagement structure affixed to the first display-supporting frame, with the multiplying surface being opposite to the lever's coupling to the support structure. A cam follower comprises a follower surface abutting the camming surface and an opposing contacting surface that contacts the multiplier lever adjacent to its coupling to the support surface. A biasing element biases the cam follower toward the cam via the multiplier lever. In this configuration, rotation of the cam from the first cam orientation to the second cam orientation causes movement of the multiplier lever that causes translation of the first display-supporting frame toward the spine.

The present disclosure also provides a method for translating a first display-supporting frame relative to a spine of a computing device, where the first display-supporting frame is rotatably coupled to a second display-supporting frame via the spine, and the computing device comprises a flexible display that spans across a first display side of the first display-supporting frame and across a second display side of the second display-supporting frame. The first display-supporting frame is rotated relative to the second display-supporting frame from an end-to-end orientation in which the flexible display is planar and spans across the first display side and the second display side, to a back-to-back orientation in which the first display side is opposing the second display side and a first portion of the flexible display extends across the first display side, a middle portion of the flexible display wraps around the spine, and a second portion of the flexible display extends across the second display side. While rotating the first display-supporting frame relative to the second display-supporting frame from the end-to-end orientation to the back-to-back orientation, the first display-supporting frame is translated toward the spine.

Optionally, the multiplier lever is rotatably coupled to the support structure about a multiplier axis that is orthogonal to a longitudinal axis of the spine, with the multiplier lever comprising a multiplying surface opposite to its coupling to the support structure that contacts an engagement structure affixed to the first display-supporting frame. A cam follower comprises a follower surface abutting the camming surface of the cam and an opposing contacting surface that contacts the multiplier lever adjacent to its coupling to the support surface. A biasing element biases the cam follower toward the cam via the multiplier lever. In this configuration, rotation of the cam from the first cam orientation to the second cam orientation causes movement of the multiplier lever that causes translation of the first display-supporting frame toward the spine.

### BRIEF DESCRIPTION OF THE DRAWINGS

FIG. 1 shows one example of a foldable computing device utilizing translation mechanisms according to examples of the present disclosure.
FIG. 2 shows the computing device folded in a back-to-back orientation.
FIG. 3 shows a schematic end view of the computing device in an end-to-end orientation.
FIG. 4 shows a schematic end view of the computing device in the back-to-back orientation.
FIG. 5 shows a schematic end view of the computing device in a face-to-face orientation.
FIG. 6 shows first and second display-supporting frames of the computing device coupled together via a first gear and a second gear in the end-to-end orientation.
FIG. 7 shows the first and second display-supporting frames in the back-to-back orientation.
FIG. 8 shows a partial perspective view of two translation mechanisms according to examples of the present disclosure.
FIG. 9 shows a cross-section view of one of the translation mechanisms of FIG. 8 taken along line 9-9 in FIG. 8.
FIG. 10 shows another partial perspective view of the two translation mechanisms of FIG. 8 according to examples of the present disclosure.
FIG. 11 shows a first display-supporting frame and a translation mechanism of FIG. 8 in which two cams are in a first cam orientation.
FIG. 12 shows a partial side view of the cams in FIG. 11 in the first cam orientation.
FIG. 13 shows the first display-supporting frame translated toward the spine and the first cam in a second cam orientation.
FIG. 14 shows a partial side view of the cams in FIG. 13 in the second cam orientation.
FIG. 15 graphically depicts an amount of translation of the first display-supporting frame as a function of rotation of the first cam from zero degrees to 360 degrees.
FIG. 16 shows another configuration of two translation mechanisms according to examples of the present disclosure.
FIG. 17 shows a partial perspective view of the two translation mechanisms of FIG. 16 according to examples of the present disclosure.
FIG. 18 shows a partial cutaway view of the cam housings of FIG. 16 showing follower pins of the cam followers engaging an inner cam surface.
FIG. 19 shows a first display-supporting frame and a translation mechanism of FIG. 17 in which the two cams are in a first cam orientation.
FIG. 20 shows a partial side view of the cams in FIG. 19 in the first cam orientation.
FIG. 21 shows the first display-supporting frame translated toward the spine and the first cam in a second cam orientation.
FIG. 22 shows a partial side view of the cams in FIG. 21 in the second cam orientation.
FIG. 23 shows a partial perspective view of another configuration of two translation mechanisms with cams in the first cam orientation according to examples of the present disclosure.
FIG. 24 shows a partial perspective view of a second display-supporting frame and a translation mechanism of FIG. 23 with the second display-supporting frame translated toward the spine and the second cam in the second cam orientation.
FIG. 25 shows a partial side view of the second cam in FIG. 23 in the first cam orientation.
FIG. 26 shows a partial side view of the second cam in FIG. 24 in the second cam orientation.
FIGS. 27A and 27B show a flow diagram of an example method for translating a first display-supporting frame relative to a spine of a computing device according to examples of the present disclosure.

### DETAILED DESCRIPTION

As noted above, some computing devices utilize a flexible display substrate that can deform as support surfaces beneath the flexible display are folded. In some of these devices, hinges couple two support surfaces for folding 180 degrees from a flat orientation in which the flexible display is substantially planar to a closed or face-to-face orientation in which one portion of the flexible display is on top of the opposing portion. However, these devices are incapable of folding the display in the opposite direction into an open or back-to-back orientation. One reason for this limitation is that these devices utilize hinge designs that would stretch and exert tensile stresses on the flexible display substrate that would damage the substrate upon folding the support surfaces from the flat orientation toward an open or back-to-back orientation.

Accordingly, the present disclosure describes translation mechanisms, computing devices, and related methods for translating display-supporting frames that support a flexible display while rotating the frames relative to one another to enable the frames and flexible display to fold into a back-to-back orientation, and in some examples to fold 360 degrees relative to one another. As described in more detail below, translation mechanisms of the present disclosure are provided for translating a first display-supporting frame, rotatably coupled to a second display-supporting frame, relative to a spine of a computing device that includes a flexible display. A support structure is rotatably coupled to the spine, and the first display-supporting frame is moveably coupled to the support structure. A cam comprises a shaft extending into the spine and a camming surface that decreases in radius from a first cam orientation to a second cam orientation.

A multiplier lever rotatably coupled to the support structure comprises a multiplying surface opposite that contacts an engagement structure affixed to the first display-supporting frame. A cam follower comprises a follower surface abutting the camming surface and an opposing contacting surface that contacts the multiplier lever. A biasing element biases the cam follower toward the cam via the multiplier lever, such that rotation of the cam from the first cam orientation to the second cam orientation causes movement of the multiplier lever that causes translation of the first display-supporting frame toward the spine.

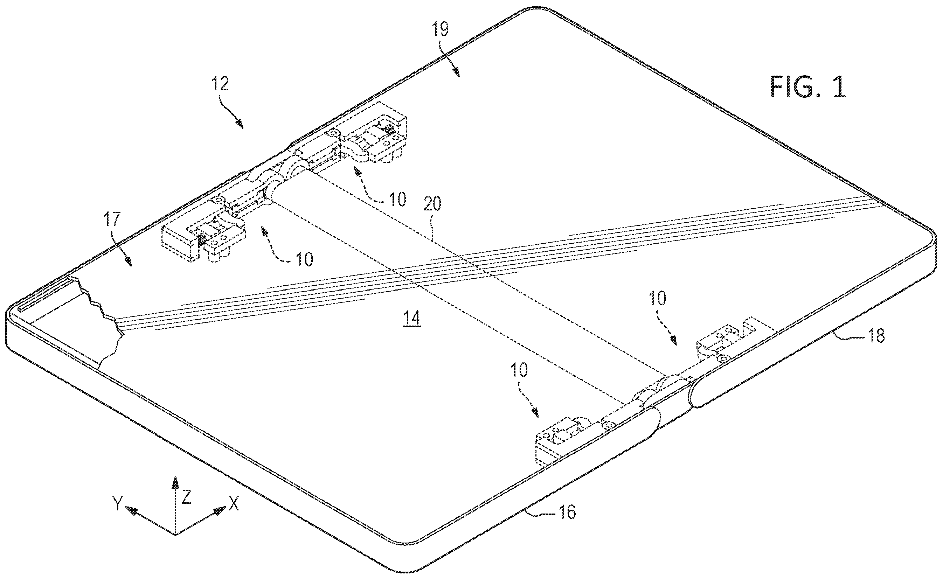

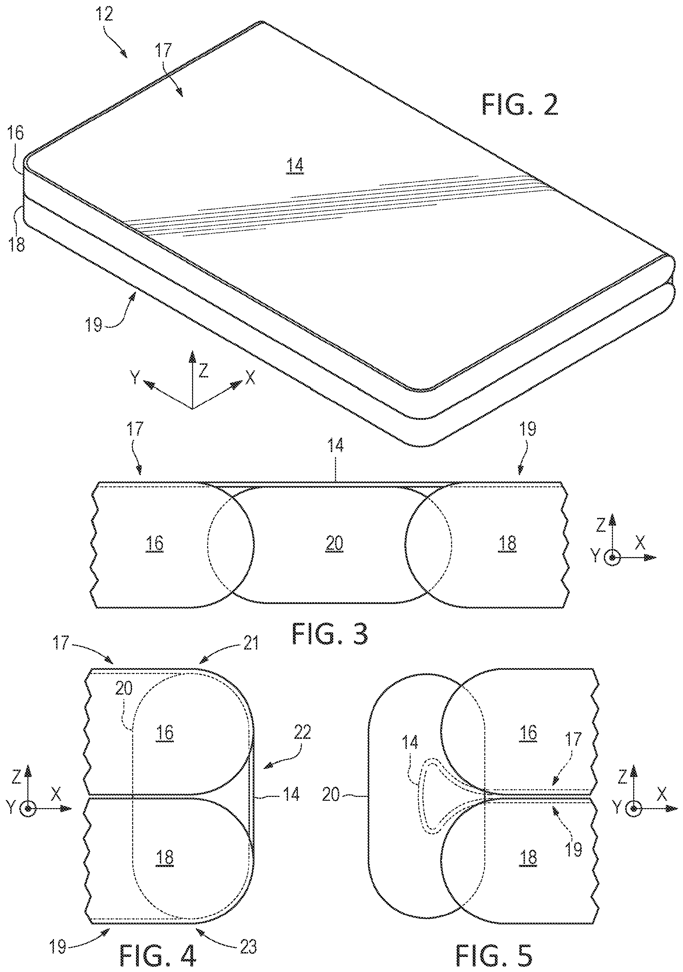

FIGS. 1-14 show one example of a computing device 12 and translation mechanisms 10 according to examples of the present disclosure. In this example, computing device 12 is foldable about a spine 20 and includes a flexible display 14 supported by a first display-supporting frame 16 at a first display side 17 and by a second display-supporting frame 18 at a second display side 19. With reference to FIGS. 2-5, and in one potential advantage of the present disclosure, the first display-supporting frame 16 is rotatably coupled via spine 20 to the second display-supporting frame 18 for 360 degrees of rotation relative to one another.

More particularly, and as shown in FIGS. 3-5, the first and second display-supporting frames 16, 18 can be rotated from a closed or face-to-face orientation in which the first display side 17 of the first display-supporting frame 16 is facing the second display side 19 of the second display-supporting frame 18 (see FIG. 5), to an end-to-end orientation of the first display-supporting frame 16 relative to the second display-supporting frame 18 in which the flexible display 14 is planar and spans across the first display-supporting frame and the second display-supporting frame (see FIG. 3), to an open or back-to-back orientation of the first display-supporting frame relative to the second display-supporting frame in which the first display side is opposing the second display side and a first portion 21 of the flexible display extends across the first display-supporting frame, a middle portion 22 of the flexible display wraps around the spine 20, and a second portion 23 of the flexible display extends across the second display-supporting frame (see FIG. 4).

As described in more detail below, to enable such 360 degrees of rotation and in another potential advantage of the present disclosure, the computing device 12 includes translation mechanisms 10 for translating the first display-supporting frame 16 and the second display-supporting frame 18 relative to the spine 20 of the computing device 12. Advantageously, by coordinating the translations of these frames with rotation of the frames about a middle spine, configurations of the present disclosure minimize or substantially eliminate tensile stresses exerted on the flexible display substrate during folding of the frames into the closed or face-to-face orientation, thereby enabling a mechanism that provides closing of the frames into the face-to-face orientation and, in some examples, a full 360-degree rotation relative to one another.

As shown in FIG. 1, in this example the computing device 12 includes two translation mechanisms 10 at opposing sides of the first display-supporting frame and two translation mechanisms 10 at opposing sides of the second display-supporting frame. As described in more detail below, each translation mechanism 10 includes a cam, cam follower, and multiplier lever that cooperate to cause translation of the coupled display-supporting frame toward and away from the spine of the computing device. The following description applies to each translation mechanism 10 of computing device 12 and its functional relationship to the corresponding display-supporting frame.

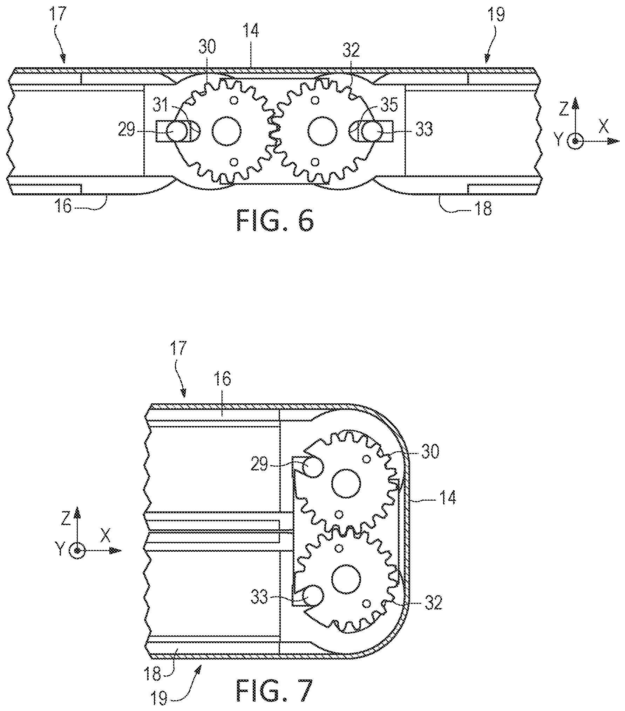

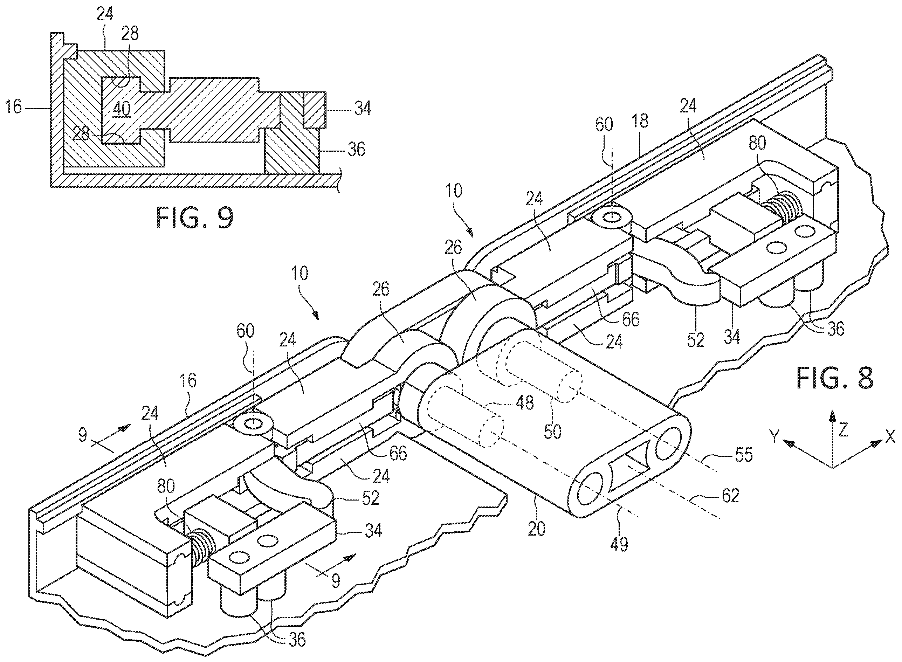

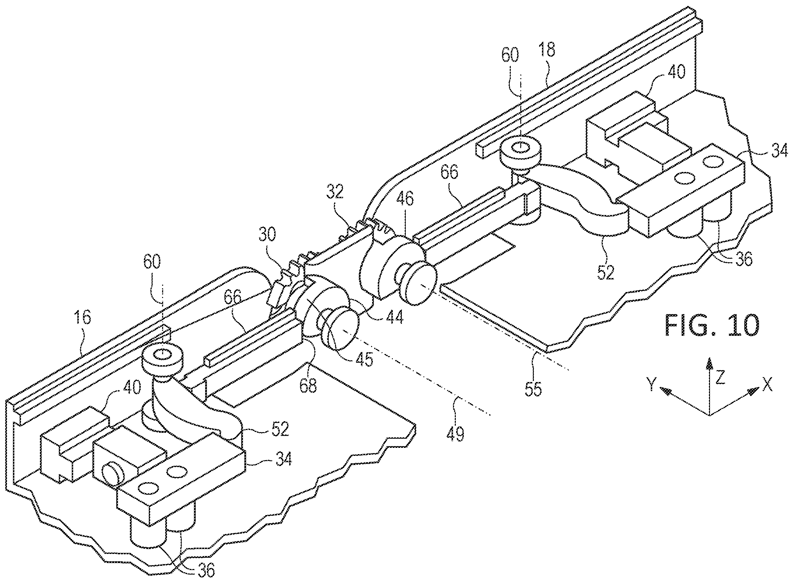

With reference to FIGS. 6, 7, and 10, the first display-supporting frame 16 and the second display-supporting frame 18 are coupled together via first gear 30 and second gear 32 to synchronize rotation of the first display-supporting frame and the second display-supporting frame relative to one another. Additionally, as described further below and with reference to FIGS. 8 and 10, a first cam 44 opposite to first gear 30 includes a first shaft 48 that extends into the spine 20 along first shaft axis 49 to affix the first cam with respect to the spine. First cam 44 is rotatably contained within a cam housing 26 such that rotation of the first display-supporting frame 16 and the moveably attached support structure 24 about the first shaft axis 49 results in rotation of the first cam 44 relative to a cam follower 66. Similarly, a second cam 46 opposite to second gear 32 includes a second shaft 50 that extends into spine 20 along second shaft axis 55 to affix the second cam 46 with respect to the spine. Like the first cam 44, the second cam 46 is rotatably contained within cam a housing 26 such that rotation of the second display-supporting frame 18 and moveably attached support structure 24 about the second shaft axis 55 results in rotation of the second cam 46 relative to a corresponding cam follower. As described in more detail below, rotation of the first cam 44 relative to its cam follower causes translation of the first display-supporting frame 16 as a function of the rotation of the first cam. Likewise, rotation of the second cam 46 relative to its cam follower causes translation of the second display-supporting frame 18 as a function of the rotation of the second cam.

As described further below and with reference to FIG. 8, each translation mechanism 10 includes a support structure 24 that is rotatably coupled to the spine 20 of the computing device. With reference again to FIGS. 6 and 7, a first pin 29 extending from support structure 24 is captured in a first gear slot 31 in first gear 30. In a similar manner, a second pin 33 extending from the opposite support structure 24 is captured in a second gear slot 35 in second gear 32. In this manner, and as described in more detail below, first pin 29 and second pin 33 operatively couple rotating movement of the support structure 24 relative to the spine 20 to rotation of the first gear 30 and second gear 32. Additionally, with reference also to FIG. 8, the rotation axis of the first gear 30 is offset in the x-axis direction from the rotation axis of the corresponding support structure 24 about first shaft axis 49. Similarly, the rotation axis of the second gear 32 is offset in x-axis direction from the rotation axis of its corresponding support structure 24 about second shaft axis 55. Advantageously, this configuration enables a reduction in the diameter of the gears that enables them to fit within a smaller gear housing.

With reference now to FIGS. 8 - 10 showing partial internal views of two translation mechanisms 10 at one side of computing device 12, a more detailed description of one translation mechanism 10 according to this example will now be provided. It will be appreciated that the following description applies to each translation mechanism 10 of computing device 12 and its functional relationship to the corresponding display-supporting frame. As shown in FIG. 8, each translation mechanism 10 includes a support structure 24 that is rotatably coupled to the spine 20 of the computing device. A cam housing 26 of each support structure 24 encloses the cam of the translation mechanism 10, such as first cam 44, to enable the cam to rotate within the cam housing, thereby moveably coupling the cam to the support structure.

Advantageously, to enable movement of the first display-supporting frame 16 relative to the spine 20 which thereby enables folding of the computing device 12 into the back-to-back orientation of FIG. 4, the first display-supporting frame is moveably coupled to the support structure 24. As shown in the cross-section of FIG. 9 and described further below, in this example the support structure 24 comprises a slot 28 that captures and slidably receives a sliding component 40 affixed to the first display-supporting frame 16 to guide linear movement in the x-axis direction of the first display-supporting frame relative to the support structure. With reference also to FIG. 10, the sliding component 40 is one feature of an engagement structure 34 that is affixed to the first display-supporting frame 16 via stanchions 36.

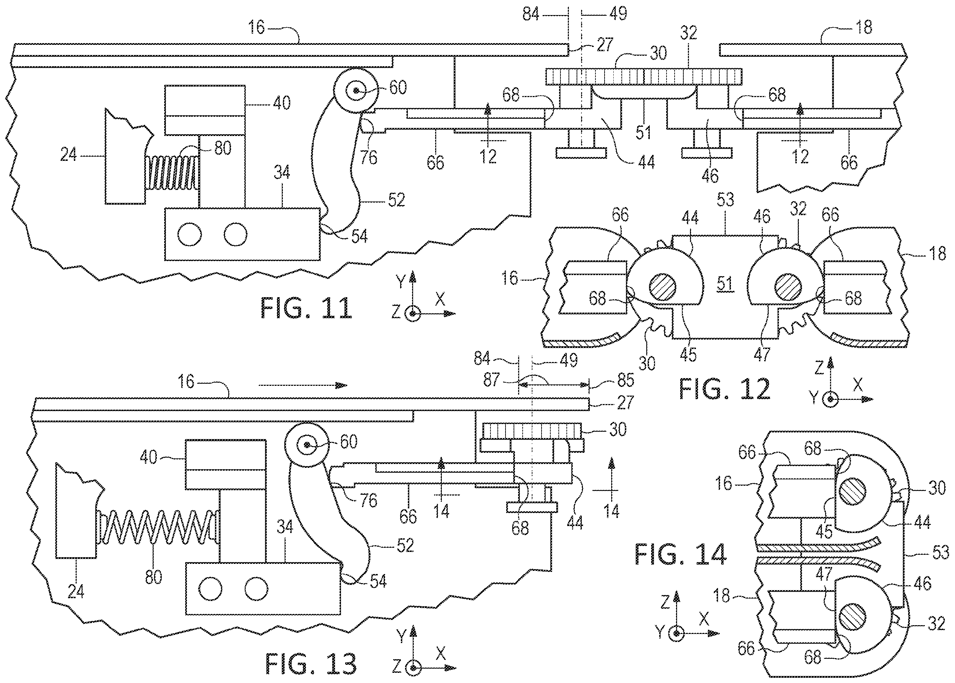

With reference to FIGS. 8 and 10, the translation mechanism 10 further includes first cam 44 comprising a first shaft 48 that extends into the spine 20. In a similar manner, opposite to first cam 44 is second cam 46 that comprises a second shaft 50 extending into the spine 20 parallel to the first shaft 48. The first cam 44 includes a first camming surface 45 that decreases in radius from a first cam orientation shown in FIG. 12 to a second cam orientation shown in FIG. 14. In this example, the radius of the first camming surface 45 is defined as the distance in the x-axis direction from the center of rotation of the first cam 44 to the first camming surface. As described in more detail below, by utilizing a cam profile that decreases in radius from the first cam orientation to the second cam orientation, the first cam 44 cooperates with cam follower 66 and a multiplier lever in the form of an elongated arm 52 to translate the first display-supporting frame 16 relative to the support structure 24 as a function of the rotation of the of the first cam.

With reference now to FIGS. 11 and 12, the cam follower 66 comprises a follower surface 68 that abuts the first camming surface 45 of first cam 44. An opposing contacting surface 76 of cam follower 66 contacts the elongated arm 52 adjacent to its coupling to the support structure 24. In this manner, the cam follower 66 translates rotational movement of the first cam 44 into rotational movement of the elongated arm 52.

As shown in FIGS. 11 and 13, the elongated arm 52 is rotatably coupled to the support structure 24 for rotation about a multiplier axis 60. With reference now to FIG. 8, in this example the multiplier axis 60 is orthogonal to the longitudinal axis 62 of the spine 20. Advantageously, utilizing a configuration in which the multiplier axis 60 is orthogonal to the longitudinal axis 62 of the spine 20 can enable the rotational coupling of elongated arm 52 to occupy a smaller y-direction thickness within computing device 12, thereby reducing necessary internal packaging space.

In this example, the elongated arm 52 comprises a multiplying surface 54, opposite to the arm's coupling to the support structure 24, that contacts the engagement structure 34 affixed to the first display-supporting frame 16. In this manner, and in another potential advantage of the present disclosure, by spacing the multiplying surface 54 from the contact point of the contacting surface 76 of cam follower 66 against the elongated arm 52, the elongated arm multiplies the relatively smaller linear movement of the cam follower 66 into a larger translational movement of the multiplying surface 54 and correspondingly the first display supporting frame 16.

As described further below and with reference to FIGS. 3-5 and 11-15, the first camming surface 45 is shaped to interact with follower surface 68 and cam follower 66 upon rotation of the cam to cause movement of the multiplier lever that causes translation of the first display-supporting frame toward or away from the spine 20. In the example of FIGS. 11-14, FIGS. 11 and 12 show the positioning of the translation mechanism 10 and the first display-supporting frame 16 with the cam 44 in the first cam orientation that corresponds to the end-to-end orientation of the first display-supporting frame 16 relative to the second display-supporting frame 18 (see FIG. 3), and an upper end 53 of a spacer plate 51 positioned as shown. In this orientation and as shown in FIG. 11, an inner end 27 of the first display-supporting frame 16 is located at a first position (indicated at 84) relative to the first shaft axis 49.

Turning to FIGS. 13 and 14, these figures show the positioning of the translation mechanism 10 and the first display-supporting frame 16 after the cam 44 has been rotated from the first cam orientation to the second cam orientation that corresponds to the back-to-back orientation of the first display-supporting frame 16 relative to the second display-supporting frame 18 (see FIG. 4), with the upper end 53 of spacer plate 51 rotated to the position shown. In this orientation and as shown in FIG. 13, and in one advantage of the present disclosure, the first display-supporting frame 16 has been translated in the positive x-axis direction relative to the support structure 24 and toward the spine 20, as indicated by the inner end 27 of the first display-supporting frame being located at a second position (indicated at 85) relative to the first shaft axis 49 which corresponds to an x-axis translation distance 87. Advantageously, by translating the first display-supporting frame 16 toward the spine 20 as the frame is rotated from the end-to-end orientation to the back-to-back orientation (and correspondingly translating the second display supporting frame 18 in the same manner), this configuration minimizes or substantially eliminates potentially-damaging tensile stresses exerted on the flexible display substrate during folding. It follows that this configuration enables a full 360-degree rotation of the first display-supporting frame 16 and second display supporting frame 18 relative to one another, as depicted in FIGS. 3-5.

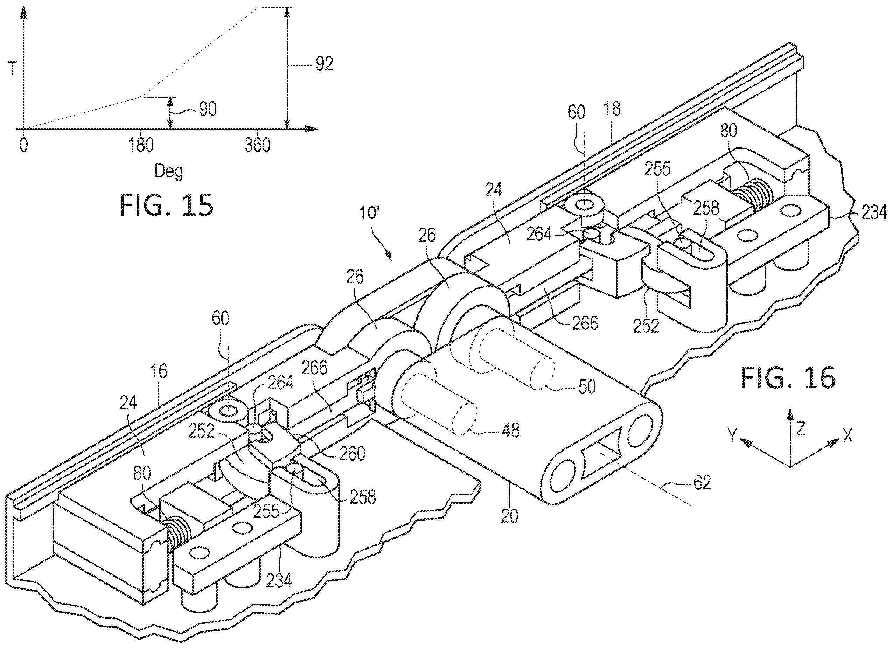

With reference now to FIGS. 12, 14, and 15, in this example the camming surface 45 of first cam 44 is configured to produce a larger translation of the first display-supporting frame 16 resulting from rotation between the end-to-end orientation of the frames (corresponding to the first cam orientation of FIG. 12) and the back-to-back orientation (corresponding to the second cam orientation of FIG. 14) as compared to the translation resulting from rotation between the face-to-face orientation (see FIG. 5) and the end-to-end orientation. FIG. 15 schematically depicts an amount of translation T of the first display-supporting frame 16 as a function of rotation of the first cam 44 between zero degrees (corresponding to the face-to-face orientation of FIG. 5) through 180 degrees (corresponding to the end-to-end orientation of FIGS. 3, 11 and 12) to 360 degrees (corresponding to the back-to-back orientation of FIG. 4, 12, and 14).

As illustrated in FIG. 15, the first display-supporting frame 16 is translated toward the spine 20 by a first distance 90 as the first display side 17 and the second display side 19 rotate between the face-to-face orientation (zero degrees) and the end-to-end orientation (180 degrees). The first display-supporting frame 16 is then translated toward the spine 20 by a second distance 92 greater than the first distance 90 as the first display side 17 and the second display side 19 rotate between the end-to-end orientation (180 degrees) and the back-to-back orientation (360 degrees). In this example, the camming surface 45 of first cam 44 is configured to produce a relatively smaller amount of translation of the first display-supporting frame 16 between zero and 180 degrees. In other examples, the camming surface 45 of first cam 44 is configured to produce no translation of the first display-supporting frame 16 between zero and 180 degrees (e.g., the radius of the camming surface 45 remains substantially constant between zero and 180 degrees).

With reference to FIGS. 8 and 11-14, to bias the cam follower 66 toward the first cam 44 and provide continuous structural engagement with the first cam via the elongated arm 52, in this example a biasing element in the form of spring 80 is provided between the engagement structure 34 and the support structure 24. As depicted in FIGS. 11 and 13, the spring 80 biases the engagement structure 34 (and affixed first display-supporting frame 16) in the x-axis direction, which biases the elongated arm 52 against the cam follower 66, which biases the follower surface 68 of the cam follower 66 against the camming surface 45. Advantageously, in this configuration the engagement structure 34, elongated arm 52, cam follower 66, and cam 44 provide structural support for the first display-supporting frame 16 that opposes movement of the first display-supporting frame relative to the support structure 24 in a compression (positive x-axis) direction toward the spine 20. Accordingly, and in another potential advantage of this configuration, if one end of a display-supporting frame were dropped onto a hard surface while the device was in the end-to-end configuration of FIG. 1, this configuration of the translation mechanism 10 would provide protective structural support for the display-supporting frame that opposes potentially damaging compression of the frame in the positive x-axis direction toward the spine 20 which could cause damage to the flexible display 14 from compressive forces. It will be appreciated that this configuration provides such structural support in any relative orientation of the first and second display-supporting frames 16, 18 between 0 and 360 degrees of rotation.

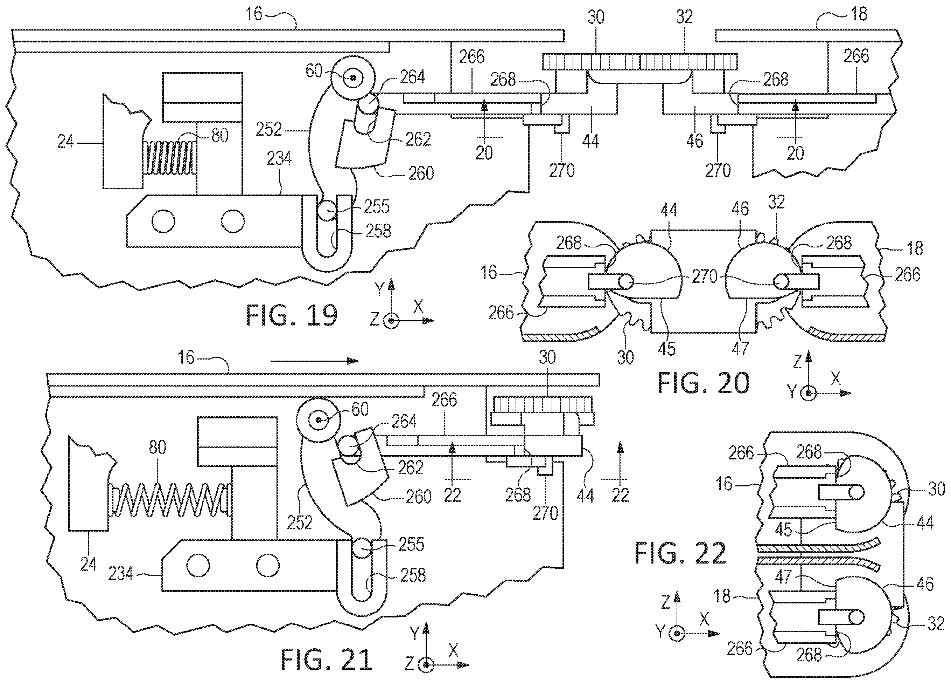

With reference now to FIGS. 16 - 22, another configuration of a translation mechanism 10' according to the present disclosure will now be described. In this configuration, components that are the same as those described above and shown in FIGS. 1-15 are presented with the same reference numerals. In this configuration and as described above, rotation of the cam 44 from the first cam orientation to the second cam orientation causes movement of a multiplier lever/elongated arm 252 that causes translation of the first display-supporting frame 16 toward or away from the spine 20. Like the example described above, in this configuration of translation mechanism 10', the camming surface 45 of first cam 44 is configured to produce a larger translation of the first display-supporting frame 16 resulting from rotation between the end-to-end orientation (corresponding to the first cam orientation of FIGS. 19 and 20) and the back-to-back orientation (corresponding to the second cam orientation of FIGS. 21 and 22) as compared to the translation resulting from rotation between the face-to-face orientation (see FIG. 5) and the end-to-end orientation.

In this configuration, a multiplier lever/elongated arm 252 of the translation mechanism 10' includes a multiplying surface comprising a first pin 255, and the engagement structure 234 comprises a first slot 258 that captures the first pin. As shown in FIGS. 19 and 21, the first pin 255 translates within the first slot 258 as the elongated arm 252 rotates about its coupling to the support structure 24 at multiplier axis 60. Additionally, in this configuration the elongated arm 252 comprises a capture element 260, and the follower surface 268 of the cam follower 266 comprises a second pin 264 that moves against a second slot surface 262 of the capture element. Advantageously, the capture element 260 cooperates with the second pin 264 of the follower surface 268 to guide the rotation of the elongated arm 252 about its multiplier axis 60.

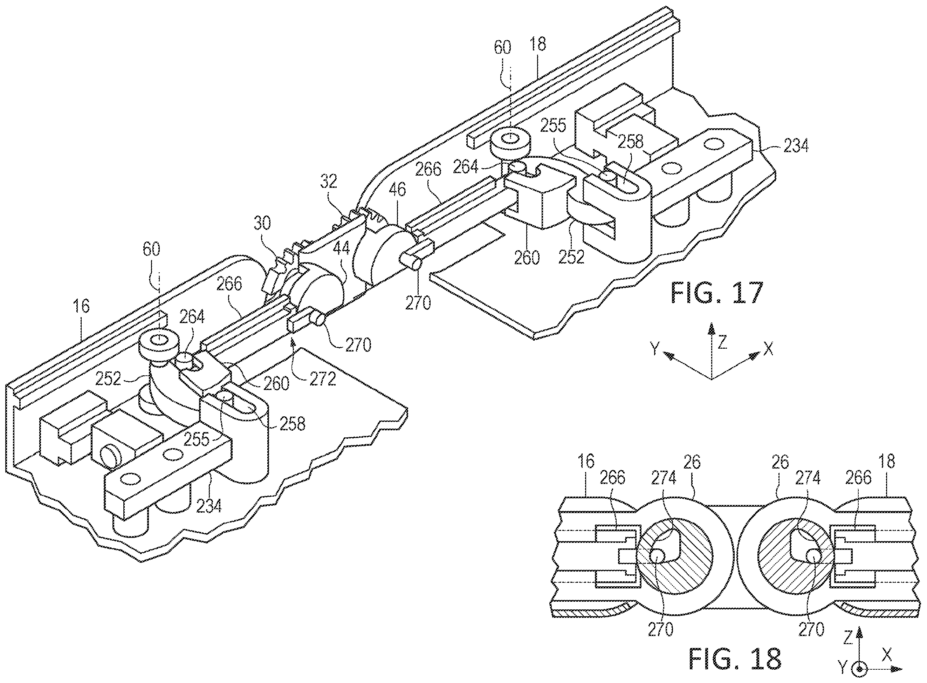

Additionally and in another potential advantage of this configuration, by capturing the first pin 255 within the first slot 258, and biasing the second pin 264 against the elongated arm 252 and moving the second pin between the second slot surface 262 and the elongated arm, the translation mechanism 10' provides structural support for the first display-supporting frame 16 that opposes movement of the frame relative to the support structure 24 in both a tension direction (negative x-axis direction) away from the spine 20 and a compression direction (positive x-axis direction) toward the spine. Additionally, this configuration also provides a second cam surface interface that similarly opposes potentially damaging movement of the first display-supporting frame 16 relative to the support structure 24. As shown in FIGS. 17 and 18, a follower pin 270 extends from a follower end 272 of the cam follower 266. The follower pin 270 engages an inner cam surface 274 of the cam housing 26 to provide structural support for the first display-supporting frame that opposes movement of the first display-supporting frame relative to the support structure in the tension direction away from the spine 20. Accordingly, and in another potential advantage of this configuration, if one end of a display-supporting frame were dropped onto a hard surface, this configuration of the translation mechanism 10 would provide protective structural support for the display-supporting frame that opposes potentially damaging compression of the frame in the positive x-axis direction toward the spine 20. Additionally, if both display-supporting frames 16, 18 were pulled in a direction away from one another, this configuration of the translation mechanism 10 would also provide protective structural support for the display-supporting frame that opposes application of potentially damaging tensile forces on the frame and the flexible display 14 away from the spine 20. It will be appreciated that this configuration provides structural support for the first display-supporting frame 16 that opposes movement of the frame relative to the support structure 24 in both a tension direction away from the spine 20 and a compression direction toward the spine in any relative orientation of the first and second display-supporting frames 16, 18 between 0 and 360 degrees of rotation.

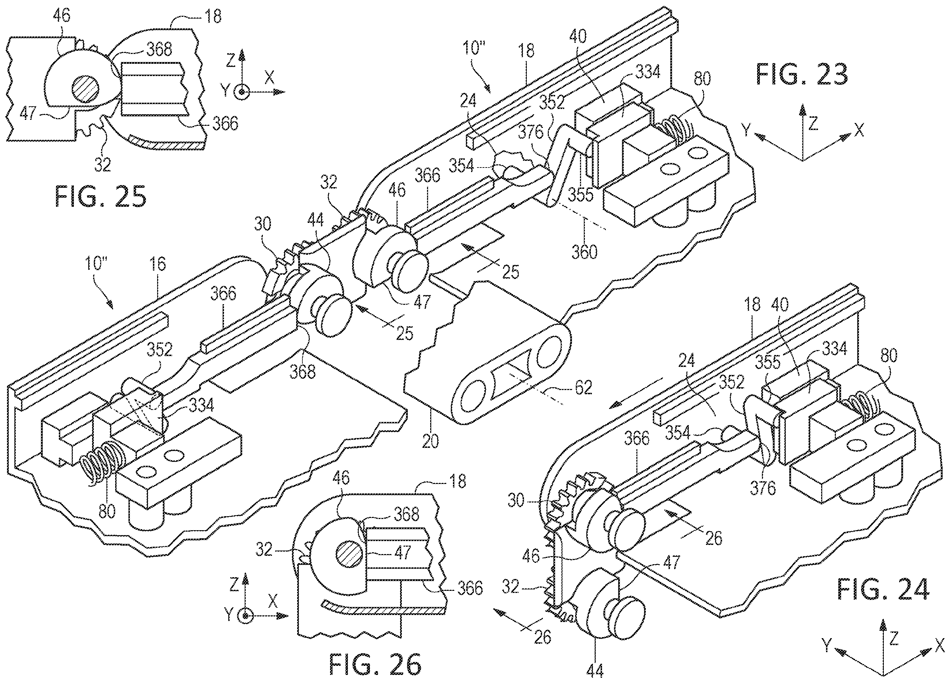

With reference now to FIGS. 23-26, another configuration of a translation mechanism 10'' according to the present disclosure will now be described. In this configuration, components that are the same as those described above and shown in FIGS. 1-15 are presented with the same reference numerals. For purposes of description, this example translation mechanism 10" is described with reference to the second display-supporting frame 18 and corresponding second cam 46 and second camming surface 47 shown in FIGS. 23-26. It will be appreciated that the following description applies to each translation mechanism 10" of computing device 12 and its functional relationship to the corresponding display-supporting frame.

In this configuration and as described above, rotation of the cam from the first cam orientation to the second cam orientation causes movement of a multiplier lever (in this example an "S-shaped" arm 352) that causes translation of the first display-supporting frame 18 toward or away from the spine 20. Like the example described above, in this configuration of translation mechanism 10'' the camming surface 47 of second cam 46 is configured to produce a larger translation of the second display-supporting frame 18 resulting from rotation between the end-to-end orientation (corresponding to the first cam orientation of FIGS. 23 and 25) and the back-to-back orientation (corresponding to the second cam orientation of FIGS. 24 and 26) as compared to the translation resulting from rotation between the face-to-face orientation (see FIG. 5) and the end-to-end orientation.

In this configuration, a multiplier lever in the form of an S-shaped arm 352 is rotatably coupled to the support structure 24 about a multiplier axis 360 that is parallel to the longitudinal axis 62 of the spine 20. In this example, a pivot arm 354 of the "S-shaped" arm 352 is rotatably coupled to support structure 24 and a multiplying arm 355 extending parallel to the pivot arm contacts the engagement structure 334. As depicted in FIGS. 24 and 26, as the second cam 46 is rotated from the first cam orientation of FIGS. 23 and 25 into the second cam orientation, the second display-supporting frame 18 is translated in the negative x-axis direction toward the spine 20. Advantageously, and like the translation mechanism 10 described above, the engagement structure 334, S-shaped arm 352, cam follower 366, and second cam 46 provide structural support for the second display-supporting frame 18 that opposes movement of the second display-supporting frame relative to the support structure 24 in a compression (negative x-axis) direction toward the spine 20. In other examples and with reference to the example described in FIGS. 17 and 18, the cam follower 366 includes a follower pin that engages the inner cam surface 274 of the cam housing 26 to also provide structural support for the second display-supporting frame 18 that opposes movement of the second display-supporting frame relative to the support structure 24 in the tension (positive x-axis) direction away from the spine 20.

In another potential advantage of each of the configurations of translation mechanisms described above, by providing 3 separate cam interfaces (camming-surface-to-follower-surface-of-cam-follower, contacting-surface-of-cam follower-to-multiplier lever, and multiplying-surface-of-multiplier-lever-to-engagement-structure), each of the three interfaces and their related components can be easily configured and tuned to produce a wide variety of translation functions that yield desired amounts of translation of the display-supporting frames during rotation of the frames relative to one another.

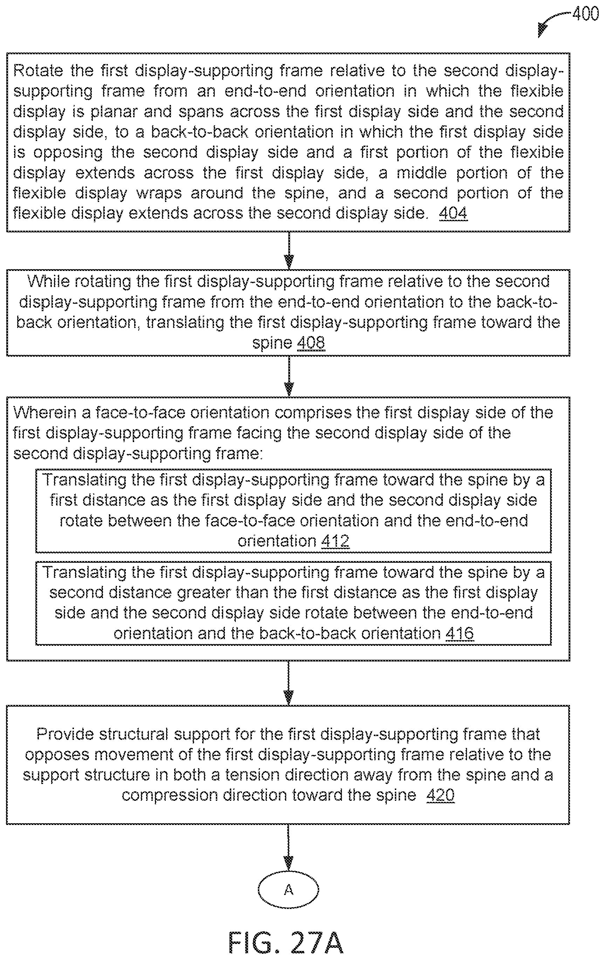

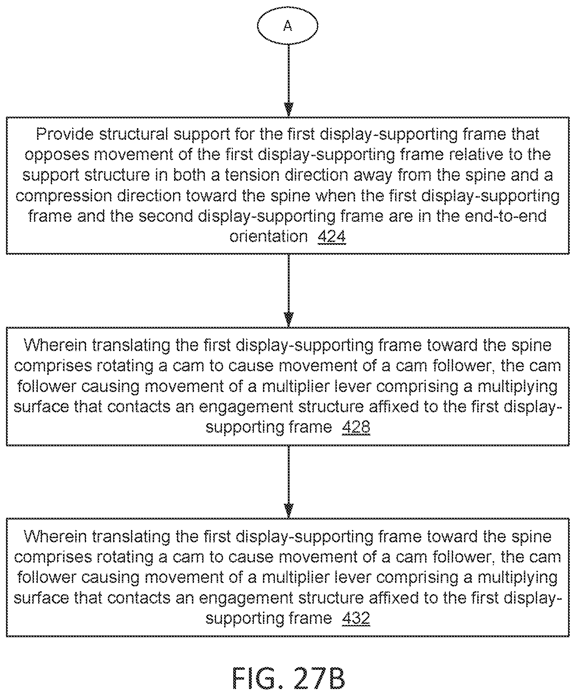

With reference now to FIGS. 27A and 27B, an example method 400 for translating a first display-supporting frame relative to a spine of a computing device will now be described. The following description of method 400 is provided with reference to the components described herein and shown in FIGS. 1-26. For example, the method 400 may be performed using the components of any of the examples of translation mechanisms described herein.

It will be appreciated that following description of method 400 is provided by way of example and is not meant to be limiting. Therefore, it is to be understood that method 400 may include additional and/or alternative steps relative to those illustrated in FIGS. 27A and 27B. Further, it is to be understood that the steps of method 400 may be performed in any suitable order. Further still, it is to be understood that one or more steps may be omitted from method 400 without departing from the scope of this disclosure. It will also be appreciated that method 400 also may be performed in other contexts using other suitable components.

With reference to FIG. 27A, in a computing device in which a first display-supporting frame is rotatably coupled to a second display-supporting frame via a spine, where the computing device comprising a flexible display that spans across a first display side of the first display-supporting frame and a second display side of the second display-supporting frame, at 404 the method 400 includes rotating the first display-supporting frame relative to the second display-supporting frame from an end-to-end orientation in which the flexible display is planar and spans across the first display side and the second display side, to a back-to-back orientation in which the first display side is opposing the second display side and a first portion of the flexible display extends across the first display side, a middle portion of the flexible display wraps around the spine, and a second portion of the flexible display extends across the second display side. At 408 the method 400 includes, while rotating the first display-supporting frame relative to the second display-supporting frame from the end-to-end orientation to the back-to-back orientation, translating the first display-supporting frame toward the spine.

At 412 the method 400 includes, wherein a face-to-face orientation comprises the first display side of the first display-supporting frame facing the second display side of the second display-supporting frame, translating the first display-supporting frame toward the spine by a first distance as the first display side and the second display side rotate between the face-to-face orientation and the end-to-end orientation. At 416 the method 400 includes translating the first display-supporting frame toward the spine by a second distance greater than the first distance as the first display side and the second display side rotate between the end-to-end orientation and the back-to-back orientation. At 420 the method 400 includes providing structural support for the first display-supporting frame that opposes movement of the first display-supporting frame relative to the support structure in a compression direction toward the spine.

With reference now to FIG. 27B, at 424 the method 400 includes providing structural support for the first display-supporting frame that opposes movement of the first display-supporting frame relative to the support structure in both a tension direction away from the spine and a compression direction toward the spine when the first display-supporting frame and the second display-supporting frame are in the end-to-end orientation. At 428 the method 400 includes wherein translating the first display-supporting frame toward the spine comprises rotating a cam to cause movement of a cam follower, the cam follower causing movement of a multiplier lever comprising a multiplying surface that contacts an engagement structure affixed to the first display-supporting frame. At 432 the method 400 includes translating the first display-supporting frame toward the spine as a function of the rotation of the cam.

The following paragraphs provide additional support for the claims of the subject application. One aspect provides a computing device comprising a flexible display supported by a first display-supporting frame which is rotatably coupled to a second display-supporting frame, the computing device further comprising a translation mechanism, the translation mechanism comprising: a support structure rotatably coupled to a spine of the computing device, wherein the first display-supporting frame is moveably coupled to the support structure; a cam comprising a shaft that operatively extends into the spine and a camming surface that decreases in radius from a first cam orientation to a second cam orientation; a multiplier lever rotatably coupled to the support structure and comprising a multiplying surface opposite to its coupling to the support structure that contacts an engagement structure affixed to the first display-supporting frame; a cam follower comprising a follower surface abutting the camming surface and an opposing contacting surface that is configured to contact the multiplier lever adjacent to its coupling to the support structure; and a biasing element configured to bias the cam follower toward the cam via the multiplier lever, wherein rotation of the cam from the first cam orientation to the second cam orientation is configured to cause movement of the multiplier lever to cause translation of the first display-supporting frame toward the spine. The computing device may additionally or alternative include, wherein the translation mechanism is configured such that rotation of the cam causes translation of the first display-supporting frame relative to the support structure. The computing device may additionally or alternative include, wherein the first display-supporting frame and the second display-supporting frame are rotatable relative to one another through approximately 360 degrees, and between zero and 180 degrees the camming surface causes a first amount of translation of the first display-supporting frame toward the spine, and between 180 degrees and 360 degrees the camming surface causes a second amount of translation of the first display-supporting frame toward the spine that is greater than the first amount of translation. The computing device may additionally or alternative include, wherein the support structure comprises a slot that captures a sliding component affixed to the first display-supporting frame to guide linear movement of the first display-supporting frame relative to the support structure. The computing device may additionally or alternative include, wherein the engagement structure, multiplier lever, cam follower, and cam provide structural support for the first display-supporting frame that opposes movement of the first display-supporting frame relative to the support structure in a compression direction toward the spine. The computing device may additionally or alternative include, wherein the first cam orientation corresponds to an end-to-end orientation of the first display-supporting frame relative to the second display-supporting frame in which the flexible display is planar and spans across the first display-supporting frame and the second display-supporting frame, and the second cam orientation corresponds to a back-to-back orientation of the first display-supporting frame relative to the second display-supporting frame in which a first portion of the flexible display extends across the first display-supporting frame, a middle portion of the flexible display wraps around the spine, and a second portion of the flexible display extends across the second display-supporting frame. The computing device may additionally or alternative include, wherein the multiplier lever comprises an elongated arm. The computing device may additionally or alternative include, wherein the multiplying surface of the multiplier lever comprises a pin, and the engagement structure comprises a slot that captures the pin, wherein the pin translates within the slot as the multiplier lever rotates about its coupling to the support structure. The computing device may additionally or alternative include, wherein the pin is a first pin, the slot is a first slot, the multiplier lever comprises a capture element, and the contacting surface of the cam follower comprises a second pin that moves against a second slot surface of the capture element of the multiplier lever. The computing device may additionally or alternative include, wherein the first pin within the first slot and the second pin against the second slot surface provide structural support for the first display-supporting frame that opposes movement of the first display-supporting frame relative to the support structure in both a tension direction away from the spine and a compression direction toward the spine. The computing device may additionally or alternative include a follower pin extending from a follower end of the cam follower, wherein the follower pin engages an inner cam surface of a cam housing to provide structural support for the first display-supporting frame that opposes movement of the first display-supporting frame relative to the support structure in the tension direction away from the spine. The computing device may additionally or alternative include, wherein the multiplier lever is rotatably coupled to the support structure about a multiplier axis that is orthogonal to a longitudinal axis of the spine.

Another aspect provides a method for translating a first display-supporting frame relative to a spine of a computing device, the first display-supporting frame rotatably coupled to a second display-supporting frame via the spine, the computing device comprising a flexible display that spans across a first display side of the first display-supporting frame and a second display side of the second display-supporting frame, the method comprising: rotating the first display-supporting frame relative to the second display-supporting frame from an end-to-end orientation in which the flexible display is planar and spans across the first display side and the second display side, to a back-to-back orientation in which the first display side is opposing the second display side and a first portion of the flexible display extends across the first display side, a middle portion of the flexible display wraps around the spine, and a second portion of the flexible display extends across the second display side; and while rotating the first display-supporting frame relative to the second display-supporting frame from the end-to-end orientation to the back-to-back orientation, translating the first display-supporting frame toward the spine. The method may additionally or alternatively include, wherein a face-to-face orientation comprises the first display side of the first display-supporting frame facing the second display side of the second display-supporting frame, the method further comprising: translating the first display-supporting frame toward the spine by a first distance as the first display side and the second display side rotate between the face-to-face orientation and the end-to-end orientation; and translating the first display-supporting frame toward the spine by a second distance greater than the first distance as the first display side and the second display side rotate between the end-to-end orientation and the back-to-back orientation. The method may additionally or alternatively include providing structural support for the first display-supporting frame that opposes movement of the first display-supporting frame relative to the support structure in a compression direction toward the spine when the first display-supporting frame and the second display-supporting frame are in the end-to-end orientation. The method may additionally or alternatively include providing structural support for the first display-supporting frame that opposes movement of the first display-supporting frame relative to the support structure in both a tension direction away from the spine and a compression direction toward the spine. The method may additionally or alternatively include, wherein translating the first display-supporting frame toward the spine comprises rotating a cam to cause movement of a cam follower, the cam follower causing movement of a multiplier lever comprising a multiplying surface that contacts an engagement structure affixed to the first display-supporting frame. The method may additionally or alternatively include translating the first display-supporting frame toward the spine as a function of the rotation of the cam.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A computing device (12) comprising a flexible display (14) supported by a first display-supporting frame (16) which is rotatably coupled to a second display-supporting frame (18), the computing device further comprising a first translation mechanism (10; 10'; 10") and a second translation mechanism (10; 10'; 10"), each translation mechanism (10; 10'; 10") comprising:
a support structure (24) rotatably coupled to a spine (20) of the computing device, wherein the support structure (24) is moveably coupled to a respective one of the first or second display-supporting frame (16, 18);
**characterized by**
a cam (44, 46) comprising a shaft (48, 50) that operatively extends into the spine (20) and a camming surface (45, 47) that decreases in radius from a first cam orientation to a second cam orientation, wherein the cam (44, 46) is coupled to the support structure (24);
a multiplier lever (52; 252; 352) rotatably coupled to the support structure (24) and comprising a multiplying surface (54; 255; 355) opposite to its coupling to the support structure (24) that contacts an engagement structure (34 ;234; 334) affixed to the respective display-supporting frame (16, 18);
a cam follower (66; 266; 366) comprising a follower surface (68; 268; 368) abutting the camming surface (45, 47) and an opposing contacting surface (76) that is configured to contact the multiplier lever (52; 252; 352) adjacent to its coupling to the support structure (24); and
a biasing element (80) configured to bias the cam follower (66; 266; 366) toward the cam (44, 46) via the multiplier lever (52; 252; 352),
wherein rotation of the respective display-supporting frame (16, 18) results in rotation of the cam (44, 46) relative to the cam follower (66; 266; 366) from the first cam orientation to the second cam orientation and is configured to cause movement of the multiplier lever (52; 252; 352) to cause translation of the respective display-supporting frame (16, 18) toward the spine (20).

2. The computing device (12) of claim 1, wherein each translation mechanism (10; 10'; 10") is configured such that rotation of the cam (44, 46) causes translation of the respective display-supporting frame relative (16, 18) to the support structure (24).

3. The computing device (12) of any preceding claim, wherein the first display-supporting frame (16) and the second display-supporting frame (18) are rotatable relative to one another through approximately 360 degrees, and between zero and 180 degrees the camming surface (45, 47) causes a first amount of translation of the respective display-supporting frame (16, 18) toward the spine (20), and between 180 degrees and 360 degrees the camming surface (45, 47) causes a second amount of translation of the respective display-supporting frame (16, 18) toward the spine (20) that is greater than the first amount of translation.

4. The computing device (12) of any preceding claim, wherein the support structure (24) comprises a slot (31, 35) that captures a sliding component (29, 33) affixed to the respective display-supporting frame (16, 18) to guide linear movement of the respective display-supporting frame (16, 18) relative to the support structure (24).

5. The computing device (12) of any preceding claim, wherein the engagement structure (34; 234; 334), multiplier lever (52; 252; 352), cam follower (66; 266; 366), and cam (44, 46) provide structural support for the respective display-supporting frame (16, 18) that opposes movement of the respective display-supporting frame (16, 18) relative to the support structure (24) in a compression direction toward the spine (20).

6. The computing device (16) of any preceding claim, wherein the first cam orientation corresponds to an end-to-end orientation of the first display-supporting frame (16) relative to the second display-supporting frame (18) in which the flexible display (14) is planar and spans across the first display-supporting frame (16) and the second display-supporting frame (18), and the second cam orientation corresponds to a back-to-back orientation of the first display-supporting frame (16) relative to the second display-supporting frame (18) in which a first portion (21) of the flexible display (14) extends across the first display-supporting frame (16), a middle portion (22) of the flexible display (14) wraps around the spine (20), and a second portion (23) of the flexible display (14) extends across the second display-supporting frame (18).

7. The computing device (12) of any preceding claim, wherein the multiplier lever (52; 252) comprises an elongated arm (52; 252), and/or
wherein the multiplier lever (352) is rotatably coupled to the support structure (24) about a multiplier axis (360) that is parallel to a longitudinal axis (62) of the spine (20), or wherein the multiplier lever (52; 252) is rotatably coupled to the support structure (24) about a multiplier axis (60) that is orthogonal to a longitudinal axis (62) of the spine (20).

8. The computing device (12) of any preceding claim, wherein the multiplying surface (255) of the multiplier lever (252) comprises a pin (255), and the engagement structure (234) comprises a slot (258) that captures the pin (255), wherein the pin (255) translates within the slot (258) as the multiplier lever (252) rotates about its coupling to the support structure (24).

9. The computing device (12) of claim 8, wherein the pin (255) is a first pin, the slot (258) is a first slot, the multiplier lever (252) comprises a capture element (260), and the contacting surface of the cam follower (266) comprises a second pin (264) that moves against a second slot surface (262) of the capture element (260) of the multiplier lever.

10. The computing device (12) of claim 9, wherein the first pin (255) within the first slot (258) and the second pin (264) against the second slot surface (262) provide structural support for the respective display-supporting frame (16, 18) that opposes movement of the respective display-supporting frame (16, 18) relative to the support structure (24) in both a tension direction away from the spine (20) and a compression direction toward the spine (20).

11. The computing device (12) of claim 10, further comprising a follower pin (270) extending from a follower end (272) of the cam follower (266), wherein the follower pin engages an inner cam surface (274) of a cam housing (26) to provide structural support for the respective display-supporting frame (16, 18) that opposes movement of the respective display-supporting frame (16, 18) relative to the support structure (24) in the tension direction away from the spine (20).

12. A method for translating a first display-supporting frame (16) relative to a spine (20) of a computing device (12) according to claim 1, the first display-supporting frame (16) rotatably coupled to a second display-supporting frame (18) via the spine (20), the computing device (12) comprising a flexible display (14) that spans across a first display side (17) of the first display-supporting frame (16) and a second display side (19) of the second display-supporting frame (18), the method comprising:
rotating the first display-supporting frame (16) relative to the second display-supporting frame (18) from an end-to-end orientation in which the flexible display (14) is planar and spans across the first display side (17) and the second display side (19), to a back-to-back orientation in which the first display side (17) is opposing the second display side (19) and a first portion (21) of the flexible display extends across the first display side (17), a middle portion (22) of the flexible display wraps around the spine (20), and a second portion (23) of the flexible display extends across the second display side (19); and
while rotating the first display-supporting frame (16) relative to the second display-supporting frame (18) from the end-to-end orientation to the back-to-back orientation, translating the first display-supporting frame (16) toward the spine (20).

13. The method of claim 12, wherein a face-to-face orientation comprises the first display side (17) of the first display-supporting frame (16) facing the second display side (19) of the second display-supporting frame (18), the method further comprising:
translating the first display-supporting frame (16) toward the spine (20) by a first distance as the first display side (17) and the second display side (19) rotate between the face-to-face orientation and the end-to-end orientation; and
translating the first display-supporting frame (16) toward the spine (20) by a second distance greater than the first distance as the first display side (17) and the second display side (19) rotate between the end-to-end orientation and the back-to-back orientation.

14. The method of claim 12 or 13, further comprising providing structural support for the first display-supporting frame (16) that opposes movement of the first display-supporting frame (16) relative to the support structure (24) in a compression direction toward the spine (20) when the first display-supporting frame (16) and the second display-supporting frame (18) are in the end-to-end orientation; and/or
providing structural support for the first display-supporting frame (16) that opposes movement of the first display-supporting frame (16) relative to the support structure (24) in both a tension direction away from the spine (20) and a compression direction toward the spine (20).

15. The method of any one of claims 12 to 14, wherein translating the first display-supporting frame (16) toward the spine (20) comprises rotating a cam (44) to cause movement of a cam follower (66), the cam follower (66) causing movement of a multiplier lever (52; 252; 352) comprising a multiplying surface (54; 255; 355) that contacts an engagement structure (34; 234; 334) affixed to the first display-supporting frame (16).

## Patentansprüche

1. Eine Rechenvorrichtung (12), die ein flexibles Display (14) beinhaltet, das von einem ersten Display-Stützrahmen (16), der mit einem zweiten Display-Stützrahmen (18) drehbar gekoppelt ist, gestützt wird, wobei die Rechenvorrichtung ferner einen ersten Verschiebemechanismus (10; 10'; 10") und einen zweiten Verschiebemechanismus (10; 10'; 10") beinhaltet, wobei jeder Verschiebemechanismus (10; 10'; 10") Folgendes beinhaltet:
eine Stützstruktur (24), die mit einem Rücken (20) der Rechenvorrichtung drehbar gekoppelt ist, wobei die Stützstruktur (24) mit einem jeweiligen einen von dem ersten oder dem zweiten Display-Stützrahmen (16, 18) beweglich gekoppelt ist;
**gekennzeichnet durch**
einen Nocken (44, 46), der einen Schaft (48, 50), der sich funktional in den Rücken (20) erstreckt, und eine Nockenwirkfläche (45, 47), deren Radius sich von einer ersten Nockenausrichtung zu einer zweiten Nockenausrichtung verringert, beinhaltet, wobei der Nocken (44, 46) mit der Stützstruktur (24) gekoppelt ist;
einen Multiplikatorhebel (52; 252; 352), der mit der Stützstruktur (24) drehbar gekoppelt ist und entgegengesetzt zu seiner Kopplung mit der Stützstruktur (24) eine Multiplikationsfläche (54; 255; 355) beinhaltet, die eine Eingriffsstruktur (34; 234; 334) berührt, die an dem jeweiligen Display-Stützrahmen (16, 18) befestigt ist;
einen Nockenstößel (66; 266; 366), der eine Stößelfläche (68; 268; 368), die an die Nockenwirkfläche (45, 47) stößt, und eine entgegengesetzte Berührungsfläche (76), die konfiguriert ist, um den Multiplikatorhebel (52; 252; 352) angrenzend an seine Kopplung mit der Stützstruktur (24) zu berühren, beinhaltet; und
ein Vorspannelement (80), das konfiguriert ist, um den Nockenstößel (66; 266; 366) mittels des Multiplikatorhebels (52; 252; 352) zu dem Nocken (44, 46) hin vorzuspannen,
wobei eine Drehung des jeweiligen Display-Stützrahmens (16, 18) zu einer Drehung des Nockens (44, 46) relativ zu dem Nockenstößel (66; 266; 366) von der ersten Nockenausrichtung in die zweite Nockenausrichtung führt und konfiguriert ist, um eine Bewegung des Multiplikatorhebels (52; 252; 352) zu bewirken, um eine Verschiebung des jeweiligen Display-Stützrahmens (16, 18) zu dem Rücken (20) hin zu bewirken.

2. Rechenvorrichtung (12) gemäß Anspruch 1, wobei jeder Verschiebemechanismus (10; 10'; 10") so konfiguriert ist, dass eine Drehung des Nockens (44, 46) eine Verschiebung des jeweiligen Display-Stützrahmens (16, 18) relativ zu der Stützstruktur (24) bewirkt.

3. Rechenvorrichtung (12) gemäß einem der vorhergehenden Ansprüche, wobei der erste Display-Stützrahmen (16) und der zweite Display-Stützrahmen (18) über ungefähr 360 Grad relativ zueinander drehbar sind und die Nockenwirkfläche (45, 47) zwischen Null und 180 Grad eine erste Menge an Verschiebung des jeweiligen Display-Stützrahmens (16, 18) zu dem Rücken (20) hin bewirkt und die Nockenwirkfläche (45, 47) zwischen 180 Grad und 360 Grad eine zweite Menge an Verschiebung des jeweiligen Display-Stützrahmens (16, 18) zu dem Rücken (20) hin bewirkt, die größer als die erste Menge an Verschiebung ist.

4. Rechenvorrichtung (12) gemäß einem der vorhergehenden Ansprüche, wobei die Stützstruktur (24) einen Schlitz (31, 35) beinhaltet, der eine Gleitkomponente (29, 33), die an dem jeweiligen Display-Stützrahmen (16, 18) befestigt ist, erfasst, um eine lineare Bewegung des jeweiligen Display-Stützrahmens (16, 18) relativ zu der Stützstruktur (24) zu führen.

5. Rechenvorrichtung (12) gemäß einem der vorhergehenden Ansprüche, wobei die Eingriffsstruktur (34; 234; 334), der Multiplikatorhebel (52; 252; 352), der Nockenstößel (66; 266; 366) und der Nocken (44, 46) dem jeweiligen Display-Stützrahmen (16, 18) eine strukturelle Unterstützung bereitstellen, die einer Bewegung des jeweiligen Display-Stützrahmens (16, 18) relativ zu der Stützstruktur (24) in einer Druckrichtung zu dem Rücken (20) hin entgegenwirkt.

6. Rechenvorrichtung (16) gemäß einem der vorhergehenden Ansprüche, wobei die erste Nockenausrichtung einer Ende-an-Ende-Ausrichtung des ersten Display-Stützrahmens (16) relativ zu dem zweiten Display-Stützrahmen (18) entspricht, in der das flexible Display (14) eben ist und sich über den ersten Display-Stützrahmen (16) und den zweiten Display-Stützrahmen (18) hinweg streckt, und die zweite Nockenausrichtung einer Rückseite-an-Rückseite-Ausrichtung des ersten Display-Stützrahmens (16) relativ zu dem zweiten Display-Stützrahmen (18) entspricht, in der sich ein erster Abschnitt (21) des flexiblen Displays (14) über den ersten Display-Stützrahmen (16) erstreckt, ein mittlerer Abschnitt (22) des flexiblen Displays (14) um den Rücken (20) herum verläuft und sich ein zweiter Abschnitt (23) des flexiblen Displays (14) über den zweiten Display-Stützrahmen (18) erstreckt.

7. Rechenvorrichtung (12) gemäß einem der vorhergehenden Ansprüche, wobei der Multiplikatorhebel (52; 252) einen länglichen Arm (52; 252) beinhaltet und/oder wobei der Multiplikatorhebel (352) um eine Multiplikatorachse (360), die zu einer Längsachse (62) des Rückens (20) parallel ist, mit der Stützstruktur (24) drehbar gekoppelt ist oder wobei der Multiplikatorhebel (52; 252) um eine Multiplikatorachse (60), die zu einer Längsachse (62) des Rückens (20) orthogonal ist, mit der Stützstruktur (24) drehbar gekoppelt ist.

8. Rechenvorrichtung (12) gemäß einem der vorhergehenden Ansprüche, wobei die Multiplikationsfläche (255) des Multiplikatorhebels (252) einen Stift (255) beinhaltet und die Eingriffsstruktur (234) einen Schlitz (258) beinhaltet, der den Stift (255) erfasst, wobei sich der Stift (255) innerhalb des Schlitzes (258) verschiebt, wenn sich der Multiplikatorhebel (252) um seine Kopplung mit der Stützstruktur (24) dreht.

9. Rechenvorrichtung (12) gemäß Anspruch 8, wobei der Stift (255) ein erster Stift ist, der Schlitz (258) ein erster Schlitz ist, der Multiplikatorhebel (252) ein Erfassungselement (260) beinhaltet und die Berührungsfläche des Nockenstößels (266) einen zweiten Stift (264) beinhaltet, der sich gegen eine zweite Schlitzfläche (262) des Erfassungselements (260) des Multiplikatorhebels bewegt.

10. Rechenvorrichtung (12) gemäß Anspruch 9, wobei der erste Stift (255) innerhalb des ersten Schlitzes (258) und der zweite Stift (264) an der zweiten Schlitzfläche (262) dem jeweiligen Display-Stützrahmen (16, 18) eine strukturelle Unterstützung bereitstellen, die einer Bewegung des jeweiligen Display-Stützrahmens (16, 18) relativ zu der Stützstruktur (24) in sowohl einer Zugrichtung von dem Rücken (20) weg als auch einer Druckrichtung zu dem Rücken (20) hin entgegenwirkt.

11. Rechenvorrichtung (12) gemäß Anspruch 10, ferner beinhaltend einen Stößelstift (270), der sich von einem Stößelende (272) des Nockenstößels (266) erstreckt, wobei der Stößelstift in eine innere Nockenfläche (274) eines Nockengehäuses (26) eingreift, um dem jeweiligen Display-Stützrahmen (16, 18) eine strukturelle Unterstützung bereitzustellen, die einer Bewegung des jeweiligen Display-Stützrahmens (16, 18) relativ zu der Stützstruktur (24) in der Zugrichtung von dem Rücken (20) weg entgegenwirkt.

12. Ein Verfahren zum Verschieben eines ersten Display-Stützrahmens (16) relativ zu einem Rücken (20) einer Rechenvorrichtung (12) gemäß Anspruch 1,
wobei der erste Display-Stützrahmen (16) mittels des Rückens (20) mit einem zweiten Display-Stützrahmen (18) drehbar gekoppelt ist, wobei die Rechenvorrichtung (12) ein flexibles Display (14) beinhaltet, das sich über eine erste Display-Seite (17) des ersten Display-Stützrahmens (16) und eine zweite Display-Seite (19) des zweiten Display-Stützrahmens (18) hinweg streckt, wobei das Verfahren Folgendes beinhaltet:
Drehen des ersten Display-Stützrahmens (16) relativ zu dem zweiten Display-Stützrahmen (18) von einer Ende-an-Ende-Ausrichtung, in der das flexible Display (14) eben ist und sich über die erste Display-Seite (17) und die zweite Display-Seite (19) hinweg streckt, in eine Rückseite-an-Rückseite-Ausrichtung, in der die erste Display-Seite (17) zu der zweiten Display-Seite (19) entgegengesetzt ist und sich ein erster Abschnitt (21) des flexiblen Displays über die erste Display-Seite (17) erstreckt, ein mittlerer Abschnitt (22) des flexiblen Displays um den Rücken (20) herum verläuft und sich ein zweiter Abschnitt (23) des flexiblen Displays über die zweite Display-Seite (19) erstreckt; und
während des Drehens des ersten Display-Stützrahmens (16) relativ zu dem zweiten Display-Stützrahmen (18) von der Ende-an-Ende-Ausrichtung in die Rückseite-an-Rückseite-Ausrichtung, Verschieben des ersten Display-Stützrahmens (16) zu dem Rücken (20) hin.

13. Verfahren gemäß Anspruch 12, wobei eine Vorderseite-an-Vorderseite-Ausrichtung beinhaltet, dass die erste Display-Seite (17) des ersten Display-Stützrahmens (16) der zweiten Display-Seite (19) des zweiten Display-Stützrahmens (18) zugewandt ist, wobei das Verfahren ferner Folgendes beinhaltet:
Verschieben des ersten Display-Stützrahmens (16) um einen ersten Abstand zu dem Rücken (20) hin, während sich die erste Display-Seite (17) und die zweite Display-Seite (19) zwischen der Vorderseite-an-Vorderseite-Ausrichtung und der Ende-an-Ende-Ausrichtung drehen; und
Verschieben des ersten Display-Stützrahmens (16) um einen zweiten Abstand, der größer als der erste Abstand ist, zu dem Rücken (20) hin, während sich die erste Display-Seite (17) und die zweite Display-Seite (19) zwischen der Ende-an-Ende-Ausrichtung und der Rückseite-an-Rückseite-Ausrichtung drehen.

14. Verfahren gemäß Anspruch 12 oder 13, ferner beinhaltend das Bereitstellen einer strukturellen Unterstützung für den ersten Display-Stützrahmen (16), die einer Bewegung des ersten Display-Stützrahmens (16) relativ zu der Stützstruktur (24) in einer Druckrichtung zu dem Rücken (20) hin entgegenwirkt, wenn sich der erste Display-Stützrahmen (16) und der zweite Display-Stützrahmen (18) in der Ende-an-Ende-Ausrichtung befinden; und/oder
Bereitstellen einer strukturellen Unterstützung für den ersten Display-Stützrahmen (16), die einer Bewegung des ersten Display-Stützrahmens (16) relativ zu der Stützstruktur (24) in sowohl einer Zugrichtung von dem Rücken (20) weg als auch einer Druckrichtung zu dem Rücken (20) hin entgegenwirkt.

15. Verfahren gemäß einem der Ansprüche 12 bis 14, wobei das Verschieben des ersten Display-Stützrahmens (16) zu dem Rücken (20) hin das Drehen eines Nockens (44) beinhaltet, um eine Bewegung eines Nockenstößels (66) zu bewirken, wobei der Nockenstößel (66) eine Bewegung eines Multiplikatorhebels (52; 252; 352) bewirkt, der eine Multiplikationsfläche (54; 255; 355) beinhaltet, die eine Eingriffsstruktur (34; 234; 334) berührt, die an dem ersten Display-Stützrahmen (16) befestigt ist.

## Revendications

1. Un dispositif informatique (12) comprenant un écran flexible (14) supporté par un premier cadre de support d'écran (16) qui est couplé, de manière à pouvoir entrer en rotation, à un deuxième cadre de support d'écran (18), le dispositif informatique comprenant en outre un premier mécanisme de translation (10 ; 10' ;10") et un deuxième mécanisme de translation (10 ; 10' ; 10"), chaque mécanisme de translation (10 ; 10' ; 10") comprenant :
une structure formant support (24) couplée, de manière à pouvoir entrer en rotation, à une colonne (20) du dispositif informatique, la structure formant support (24) étant couplée, de manière à pouvoir être mobile, à un cadre respectif parmi le premier cadre de support d'écran ou le deuxième cadre de support d'écran (16, 18) ;
**caractérisé par**
une came (44, 46) comprenant un arbre (48, 50) qui s'étend de manière fonctionnelle jusque dans la colonne (20) et une surface de came (45, 47) qui diminue en rayon d'une première orientation de came à une deuxième orientation de came, la came (44, 46) étant couplée à la structure formant support (24) ;
un levier multiplicateur (52 ; 252 ; 352) couplé, de manière à pouvoir entrer en rotation, à la structure formant support (24) et comprenant une surface de multiplication (54 ; 255 ; 355) à l'opposé de son couplage à la structure formant support (24) qui est en contact avec une structure de mise en prise (34 ; 234 ; 334) fixée au cadre de support d'écran (16, 18) respectif ;
un suiveur de came (66 ; 266 ; 366) comprenant une surface de suiveur (68 ; 268 ; 368) attenante à la surface de came (45, 47) et une surface de contact opposée (76) qui est configurée pour être en contact avec le levier multiplicateur (52 ; 252 ; 352) adjacent à son couplage à la structure formant support (24) ; et
un élément de sollicitation (80) configuré pour solliciter le suiveur de came (66 ; 266 ; 366) vers la came (44, 46) par l'intermédiaire du levier multiplicateur (52 ; 252 ; 352), dans lequel la rotation du cadre de support d'écran (16, 18) respectif entraîne la rotation de la came (44, 46) par rapport au suiveur de came (66 ; 266 ; 366) de la première orientation de came à la deuxième orientation de came et est configurée pour provoquer le mouvement du levier multiplicateur (52 ; 252 ; 352) afin de provoquer la translation du cadre de support d'écran (16, 18) respectif vers la colonne (20).

2. Le dispositif informatique (12) de la revendication 1, dans lequel chaque mécanisme de translation (10 ; 10' ; 10") est configuré de telle sorte que la rotation de la came (44, 46) provoque la translation du cadre de support d'écran (16, 18) respectif par rapport à la structure formant support (24).

3. Le dispositif informatique (12) de n'importe quelle revendication précédente, dans lequel le premier cadre de support d'écran (16) et le deuxième cadre de support d'écran (18) peuvent entrer en rotation l'un par rapport à l'autre d'environ 360 degrés, et entre zéro et 180 degrés la surface de came (45, 47) provoque une première quantité de translation du cadre de support d'écran (16, 18) respectif vers la colonne (20), et entre 180 degrés et 360 degrés la surface de came (45, 47) provoque une deuxième quantité de translation du cadre de support d'écran (16, 18) respectif vers la colonne (20) qui est supérieure à la première quantité de translation.

4. Le dispositif informatique (12) de n'importe quelle revendication précédente, dans lequel la structure formant support (24) comprend une fente (31, 35) qui capture un composant de glissement (29, 33) fixé au cadre de support d'écran (16, 18) respectif pour guider le mouvement linéaire du cadre de support d'écran (16, 18) respectif par rapport à la structure formant support (24).

5. Le dispositif informatique (12) de n'importe quelle revendication précédente, dans lequel la structure de mise en prise (34 ; 234 ; 334), le levier multiplicateur (52 ; 252 ; 352), le suiveur de came (66 ; 266 ; 366), et la came (44, 46) fournissent un support structural pour le cadre de support d'écran (16, 18) respectif qui s'oppose au mouvement du cadre de support d'écran (16, 18) respectif par rapport à la structure formant support (24) dans une direction de compression vers la colonne (20).

6. Le dispositif informatique (16) de n'importe quelle revendication précédente, dans lequel la première orientation de came correspond à une orientation extrémité à extrémité du premier cadre de support d'écran (16) par rapport au deuxième cadre de support d'écran (18) dans laquelle l'écran flexible (14) est plan et s'étire sur tout le premier cadre de support d'écran (16) et sur tout le deuxième cadre de support d'écran (18), et la deuxième orientation de came correspond à une orientation dos à dos du premier cadre de support d'écran (16) par rapport au deuxième cadre de support d'écran (18) dans laquelle une première portion (21) de l'écran flexible (14) s'étend sur tout le premier cadre de support d'écran (16), une portion intermédiaire (22) de l'écran flexible (14) enveloppe la colonne (20), et une deuxième portion (23) de l'écran flexible (14) s'étend sur tout le deuxième cadre de support d'écran (18).

7. Le dispositif informatique (12) de n'importe quelle revendication précédente, dans lequel le levier multiplicateur (52 ; 252) comprend un bras allongé (52 ; 252), et/ou dans lequel le levier multiplicateur (352) est couplé, de manière à pouvoir entrer en rotation, à la structure formant support (24) autour d'un axe multiplicateur (360) qui est parallèle à un axe longitudinal (62) de la colonne (20), ou dans lequel le levier multiplicateur (52 ; 252) est couplé, de manière à pouvoir entrer en rotation, à la structure formant support (24) autour d'un axe multiplicateur (60) qui est orthogonal à un axe longitudinal (62) de la colonne (20).

8. Le dispositif informatique (12) de n'importe quelle revendication précédente, dans lequel la surface de multiplication (255) du levier multiplicateur (252) comprend une tige (255), et la structure de mise en prise (234) comprend une fente (258) qui capture la tige (255), la tige (255) se translatant au sein de la fente (258) à mesure que le levier multiplicateur (252) est en rotation autour de son couplage à la structure formant support (24).

9. Le dispositif informatique (12) de la revendication 8, dans lequel la tige (255) est une première tige, la fente (258) est une première fente, le levier multiplicateur (252) comprend un élément de capture (260), et la surface de contact du suiveur de came (266) comprend une deuxième tige (264) qui se déplace contre une deuxième surface à fente (262) de l'élément de capture (260) du levier multiplicateur.

10. Le dispositif informatique (12) de la revendication 9, dans lequel la première tige (255) au sein de la première fente (258) et la deuxième tige (264) contre la deuxième surface à fente (262) fournissent un support structural pour le cadre de support d'écran (16, 18) respectif qui s'oppose au mouvement du cadre de support d'écran (16, 18) respectif par rapport à la structure formant support (24) dans à la fois une direction de tension loin de la colonne (20) et une direction de compression vers la colonne (20).

11. Le dispositif informatique (12) de la revendication 10, comprenant en outre une tige de suiveur (270) s'étendant depuis une extrémité de suiveur (272) du suiveur de came (266), la tige de suiveur se mettant en prise avec une surface de came interne (274) d'un logement de came (26) pour fournir un support structural pour le cadre de support d'écran (16, 18) respectif qui s'oppose au mouvement du cadre de support d'écran (16, 18) respectif par rapport à la structure formant support (24) dans la direction de tension loin de la colonne (20).

12. Un procédé pour translater un premier cadre de support d'écran (16) par rapport à une colonne (20) d'un dispositif informatique (12) selon la revendication 1,
le premier cadre de support d'écran (16) étant couplé, de manière à pouvoir entrer en rotation, à un deuxième cadre de support d'écran (18) par l'intermédiaire de la colonne (20), le dispositif informatique (12) comprenant un écran flexible (14) qui s'étire sur tout un premier côté d'écran (17) du premier cadre de support d'écran (16) et sur tout un deuxième côté d'écran (19) du deuxième cadre de support d'écran (18), le procédé comprenant :
le fait de mettre en rotation le premier cadre de support d'écran (16) par rapport au deuxième cadre de support d'écran (18) d'une orientation d'extrémité à extrémité dans laquelle l'écran flexible (14) est plan et s'étire sur tout le premier côté d'écran (17) et sur tout le deuxième côté d'écran (19), à une orientation dos à dos dans laquelle le premier côté d'écran (17) s'oppose au deuxième côté d'écran (19) et une première portion (21) de l'écran flexible s'étend sur tout le premier côté d'écran (17), une portion intermédiaire (22) de l'écran flexible enveloppe la colonne (20), et une deuxième portion (23) de l'écran flexible s'étend sur tout le deuxième côté d'écran (19) ; et
tout en mettant en rotation le premier cadre de support d'écran (16) par rapport au deuxième cadre de support d'écran (18) de l'orientation extrémité à extrémité à l'orientation dos à dos, le fait de translater le premier cadre de support d'écran (16) vers la colonne (20).

13. Le procédé de la revendication 12, dans lequel une orientation face à face comprend le premier côté d'écran (17) du premier cadre de support d'écran (16) tourné vers le deuxième côté d'écran (19) du deuxième cadre de support d'écran (18), le procédé comprenant en outre :
le fait de translater le premier cadre de support d'écran (16) vers la colonne (20) d'une première distance à mesure que le premier côté d'écran (17) et le deuxième côté d'écran (19) sont en rotation entre l'orientation face à face et l'orientation extrémité à extrémité ; et
le fait de translater le premier cadre de support d'écran (16) vers la colonne (20) d'une deuxième distance supérieure à la première distance à mesure que le premier côté d'écran (17) et le deuxième côté d'écran (19) sont en rotation entre l'orientation extrémité à extrémité et l'orientation dos à dos.

14. Le procédé de la revendication 12 ou de la revendication 13, comprenant en outre le fait de fournir un support structural pour le premier cadre de support d'écran (16) qui s'oppose au mouvement du premier cadre de support d'écran (16) par rapport à la structure formant support (24) dans une direction de compression vers la colonne (20) lorsque le premier cadre de support d'écran (16) et le deuxième cadre de support d'écran (18) sont dans l'orientation extrémité à extrémité ; et/ou
le fait de fournir un support structural pour le premier cadre de support d'écran (16) qui s'oppose au mouvement du premier cadre de support d'écran (16) par rapport à la structure formant support (24) dans à la fois une direction de tension loin de la colonne (20) et une direction de compression vers la colonne (20).

15. Le procédé de n'importe laquelle des revendications 12 à 14, dans lequel le fait de translater le premier cadre de support d'écran (16) vers la colonne (20) comprend le fait de mettre en rotation une came (44) pour provoquer le mouvement d'un suiveur de came (66), le suiveur de came (66) provoquant le mouvement d'un levier multiplicateur (52 ; 252 ; 352) comprenant une surface de multiplication (54 ; 255 ; 355) qui est en contact avec une structure de mise en prise (34 ; 234 ; 334) fixée au premier cadre de support d'écran (16).
